# EUROPEAN PATENT SPECIFICATION

(11) **EP 2 554 434 B1**
(45) Date of publication and mention of the grant of the patent: **21.05.2014**
(21) Application number: 11176707.5
(22) Date of filing: 05.08.2011
(51) Int. Cl.: B60R 1/00

(54) **Vehicle surround view system**
Fahrzeug-Surround-Blicksystem
Système de visualisation panoramique de véhicule

(43) Date of publication of application: 06.02.2013
(73) Proprietor: Harman Becker Automotive Systems GmbH, 76307 Karlsbad (DE)
(72) Inventor: Quast, Johannes, 76133 Karlsruhe (DE); Scholl, Kay-Ulrich, 76307 Karlsbad (DE); Gassmann, Bernd, 75334 Straubenhardt-Langenalb (DE)
(74) Representative: Bertsch, Florian Oliver

(56) References cited:
- EP-A1- 2 234 399
- EP-A1- 2 285 109
- EP-A2- 1 302 365
- US-A1- 2003 021 490
- US-A1- 2009 042 173

## Description

The invention relates to a vehicle surround view system and to a method for generating a surround view.

### Related Art

In recent years the use of image sensors in vehicles is proliferating. Often, these image sensors/cameras are used in driver assist system in which the image sensors track the vehicle environment, identify objects and warn the driver of possible dangerous driving situations. Furthermore, image sensors are used as rear view cameras which help the driver with parking the vehicle and which help the driver to be informed of any obstacle located behind the vehicle. It has been observed that vehicles equipped with rear vision systems have caused near accidents, as the view provided by the image sensors of the rear part of the vehicle suggests that the driver have more space than in reality. The different image sensors provide a three-dimensional scene of the vehicle and its surroundings. The document EP 2 234 399 discloses a vehicle surround view system according to the preamble of claim 1.

### Summary

In this connection a need exists to simulate a realistic perspective view of the vehicle displayed to the driver. Furthermore, the user should be easily able to change the viewing direction and the viewing position.

This need is met by the features of the independent claims. In the dependent claims preferred embodiments are described.

According to a first aspect, a vehicle surround view system is provided comprising a plurality of image sensors provided at different locations of the vehicle, the image sensors generating image data of the vehicle surroundings that cover the complete surroundings of the vehicle. Furthermore, an image processing unit is provided processing the image data of the plurality of image sensors, the image processing unit being configured to generate a vehicle surround view based on the image data of the different image sensors. For generating the vehicle surround view the image processing unit is configured to project the image data inversely on a bowl surrounding the vehicle. Furthermore, the image processing unit uses a virtual camera position from which the vehicle surround view is observed in order to generate a virtual user vehicle view. The image processing unit allocates the virtual camera position on a first horizontal ellipse located at a first vertical height around the vehicle. The image processing unit is furthermore configured to determine a viewing direction from the virtual camera position in such a way that it is going through a point located on a second horizontal ellipse located at a second vertical height around the vehicle that is lower than the first vertical height, the second ellipse being smaller than the first ellipse. Furthermore, a control unit is provided allowing to change the virtual camera position at least in a horizontal direction and to change the viewing direction. By providing the virtual camera position on a first horizontal ellipse and by using a viewing direction going through a second horizontal ellipse which is smaller than the first ellipse and which is provided at a lower vertical height, a virtual user vehicle view is obtained which corresponds to the view of a real person looking at the vehicle and inspecting e.g. the rear part of the vehicle. Furthermore, by providing the virtual camera position on the first horizontal ellipse, the vehicle view can be changed easily and the walking of the real person around the vehicle can be simulated in an effective way. The first ellipse builds a plane in which the virtual camera position is located, the virtual camera position being moved in this plane on the ellipse to generate different virtual user vehicle views. For different virtual camera positions around the vehicle the virtual camera position is provided on the first ellipse, the viewing direction going through points on the second ellipse independent of the selection of the viewing direction.

One possibility to provide a very realistic virtual user vehicle view may be to use a first bottom vertical height of the first ellipse and of the virtual camera position which is substantially at eye level of a human being having an average height. By locating the first ellipse in a range of e.g. 1.6-1.8 m a realistic representation of the vehicle surroundings can be obtained. As the second horizontal ellipse is lower than the first ellipse, the viewing direction is tilted downwards corresponding to a natural viewing direction of a human being standing next to the vehicle and looking at the vehicle.

For changing the vehicle view in one horizontal direction the image processing unit may be configured to first keep the virtual camera position fixed and to change the viewing direction in such a way that the viewing direction goes through points located on the second ellipse, wherein the points move in said one horizontal direction on the second ellipse when the viewing direction is changed. In this example, when the user commands a change of the viewing direction in one horizontal direction, the virtual camera position is at first kept unchanged and the viewing direction is changed in such a way that the viewing direction continues to go through points located on the second ellipse, these points being located on the second ellipse in said one horizontal direction from which the user wants to have more information. This corresponds to a natural behaviour of a human being who will first, when needing information from one direction will turn the head to change the viewing direction in said direction. When changing the viewing direction, the view follows the second ellipse. When the viewing direction is changed to the right side, the viewing direction will follow points located on the second ellipse on the right side relative to the present virtual camera position. A corresponding situation exists for the other side, the left side, the viewing direction will follow points located on the second ellipse on the left side.

The more the viewing direction is changed away from the vehicle, the further away the points are located on the second ellipse from the virtual camera position.

It is furthermore possible that the image processing unit is configured to keep the virtual camera position fixed and to change the viewing direction until a predefined maximum opening angle of the viewing direction at the center of a plane defined by the second ellipse is obtained. When this maximum opening angle is obtained and when a further change of the virtual user, the vehicle view in said one horizontal direction is desired, the image processing unit is then configured to move the virtual camera position on the first ellipse in said one horizontal direction, the viewing direction continuing to go through points on the second ellipse. This way of controlling the virtual camera position and the viewing direction helps to further improve the simulation of a natural behaviour of a user that is inspecting the vehicle surroundings, especially in the back of the vehicle.

In this context the image processing unit may be configured such that when the virtual camera position on the first ellipse is moved in said one horizontal direction the viewing direction is determined for each of the positions of the virtual camera position on the first ellipse in such a way that the viewing direction continues to go through points located on the second ellipse in said one horizontal direction with the predefined maximum opening angle being maintained. The opening angle is defined as the angle between the projection of direct connection of the virtual camera position to the center of the second ellipse projected on the second ellipse and the connection of the center of the second ellipse to the point through which the viewing direction goes.

Furthermore, it is possible that the image processing unit determines the size of the second ellipse in such a way that the size of the second ellipse substantially corresponds to the vehicle size. The center of the second ellipse and the center of the first ellipse can be selected in such a way that they are located coaxial on an axis going through the center of the first and second ellipse, e.g. approximately at the center of the vehicle, the center of the vehicle being defined as half the length and half the width of the vehicle. When the size of the second ellipse substantially corresponds to the vehicle size, the size of the first ellipse may be determined in such a way that the size of the first ellipse is 10-30% bigger than the size of the second.

The image processing unit may further be configured to provide a default or starting virtual user vehicle view in which the virtual camera position is behind the vehicle on a point on the first ellipse that is located on the major axis of the first ellipse, the viewing direction going trough a point located on the second ellipse on its major axis. In this embodiment the first and the second ellipse are arranged such that the major axis of the first and the second ellipse are parallel to each other. This starting virtual user vehicle view corresponds to a view when the user is positioned behind the vehicle in the middle of the vehicle looking down to the vehicle.

For facilitating the controlling of a virtual camera position and of the viewing direction by the user, the control unit may contain a turning portion which is operable to be turned in one direction to indicate a change of the virtual user vehicle view in one horizontal direction. Furthermore, the control unit with its turning portion may be turned in the other direction to indicate a change of the virtual user vehicle view in the other horizontal direction. Control units having a turning portion as described above exist in every vehicle electronic system used for controlling a radio receiver, an audio output unit, a navigation unit and a telecommunication unit. By simply operating the turning portion in one direction or the other direction, first the viewing direction and then the virtual camera position can be changed either in one direction or the other direction.

Additionally, it may be possible that the image processing unit is configured to change the virtual camera position in a vertical plane from a bottom vertical height to a bird's eye view above the vehicle. In this embodiment the size of the first and of the second ellipse depend on the corresponding vertical height. This vertical movement of the virtual camera position and the viewing direction may be such that the virtual camera position moves in the vertical direction on a first ellipsoidally shaped body defined by a rotation of the first ellipse at the first bottom vertical height around its minor axis, the viewing direction continuing to go through points located on a second ellipsoidally shaped body defined by a rotation of the second ellipse at a second bottom vertical height about its minor axis. When the vertical position of the virtual camera position is determined, the corresponding vertical position of the second ellipse, through which the viewing direction goes, may be determined in such a way that an elevation angle of the camera above a plane defined by the first ellipse at its bottom vertical height is the same as the elevation angle of the second ellipse relative to the second ellipse at its bottom vertical height. In this example the user cannot only move around the vehicle at a predefined vertical height corresponding to the eyes level, but is also able to view the vehicle surroundings from other viewing angles above the vehicle. In this context the control unit may have additional operating elements to change the vertical direction. By way of example the control unit may be a four-way rocker to change the virtual camera position in the horizontal and in the vertical direction.

The invention furthermore relates to a method for generating a vehicle surround view using a plurality of image sensors provided at different locations of the vehicle. According to one step of the method the image data of the plurality of image sensors is processed to generate the vehicle surround view based on the image data of the different image sensors, the image data being inversely projected on the bowl surrounding the vehicle. Furthermore, a virtual user vehicle view is generated in which the vehicle surround view is shown from a virtual camera position from which the vehicle surround view is observed using a viewing direction. The virtual camera position is allocated on the first horizontal ellipse located at the first vertical height around the vehicle, wherein the viewing direction from the virtual camera position is such that it is going through a point located on the second horizontal ellipse located at a second lower vertical height than the first vertical height around the vehicle, the second ellipse being smaller than the first ellipse. With this method for generating the vehicle surround view this situation of a virtual user walking around the vehicle can be simulated in a realistic way.

Furthermore, it is possible that, when a command for changing the vehicle view in one horizontal direction is detected, the virtual camera position is kept unchanged at the beginning and in response to the detected command the viewing direction is changed in such a way that the viewing direction goes through points located on a second ellipse, the points located on a second ellipse moving in said one horizontal direction on the second ellipse when the viewing direction is changed.

The virtual camera position may be kept unchanged until the predefined maximum opening angle of the viewing direction at the center of the plane defined by the second ellipse is obtained. When a command for a further change of the virtual user vehicle view in said one horizontal direction is detected, the virtual camera position starts to move on the first ellipse in said one horizontal direction, the viewing direction continuing to go through points on the second ellipse. As mentioned above, the viewing direction may be determined in such a way that the viewing direction continues to go through points located on a second ellipse, the second points being determined such that the predefined maximum opening angle of the viewing direction is maintained when the virtual camera position is moved on the first ellipse.

Furthermore, it is possible that when a command for changing the virtual user vehicle view in the other horizontal direction is detected, the procedure is analogue in the other direction, meaning that the virtual camera position is at the beginning kept unchanged and in response to the detected command the viewing direction is changed in such a way that the viewing direction goes through points located on the second ellipse, the points moving on the second ellipse in the other horizontal direction when the viewing direction is changed. The virtual camera position is kept unchanged until the maximum opening angle is attained.

Furthermore, the virtual user vehicle view can be displayed on a display of the vehicle surround view system.

### Brief description of the drawings

The invention will be described in further detail below with reference to the accompanying drawings. In these drawings
Fig. 1 shows a schematic view of the vehicle surround view system,
Fig. 2 is a schematic view of a situation of a virtual user looking at the vehicle using a first ellipse and the second ellipse, the image data of the vehicle surround view system being projected on a bowl shown in Fig. 2,
Fig. 3 shows a schematic view of a starting vehicle view with the position of the first ellipse and the second ellipse relative to the vehicle,
Fig. 4 shows the situation when a user wants to look at the right side of the vehicle with the virtual camera position being unchanged,
Fig. 5 shows the situation with the virtual camera position being moved to the right side,
Fig. 6 shows the situation where the virtual camera position is changed back to the rear part and the left side of the vehicle,
Fig. 7 shows the situation where the viewing direction is changed from a starting vehicle view to the left side of the vehicle,
Fig. 8 shows the movement of the virtual camera position and the viewing direction in the vertical direction in a vehicle side view,
Fig. 9 shows a flowchart indicating how the virtual user vehicle view is generated and adapted, and
Fig. 10 shows the movement of the vertical camera position of Fig. 8 on an ellipsoidally shaped body in a vehicle rear view.

### Detailed Description

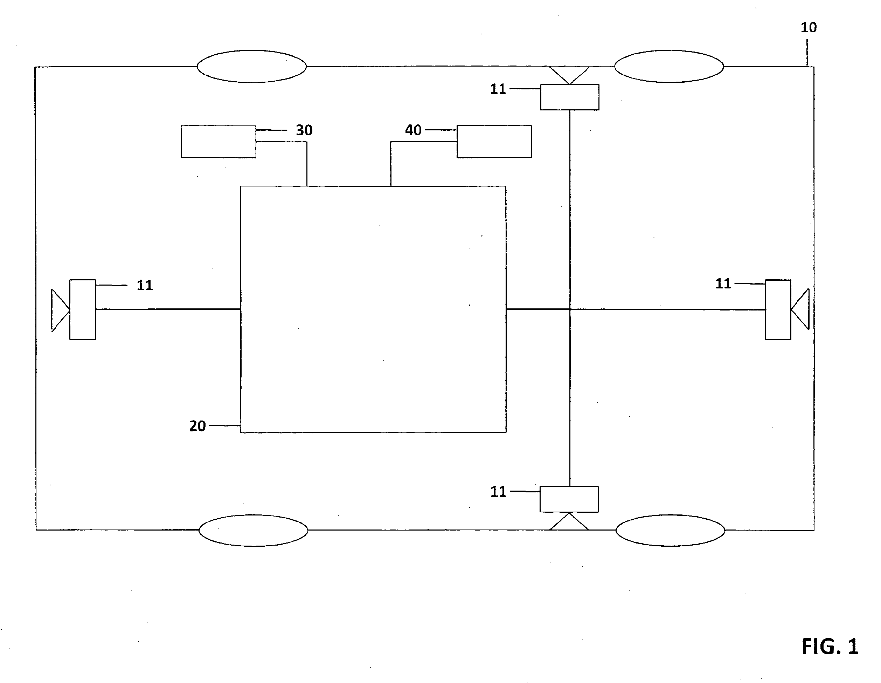

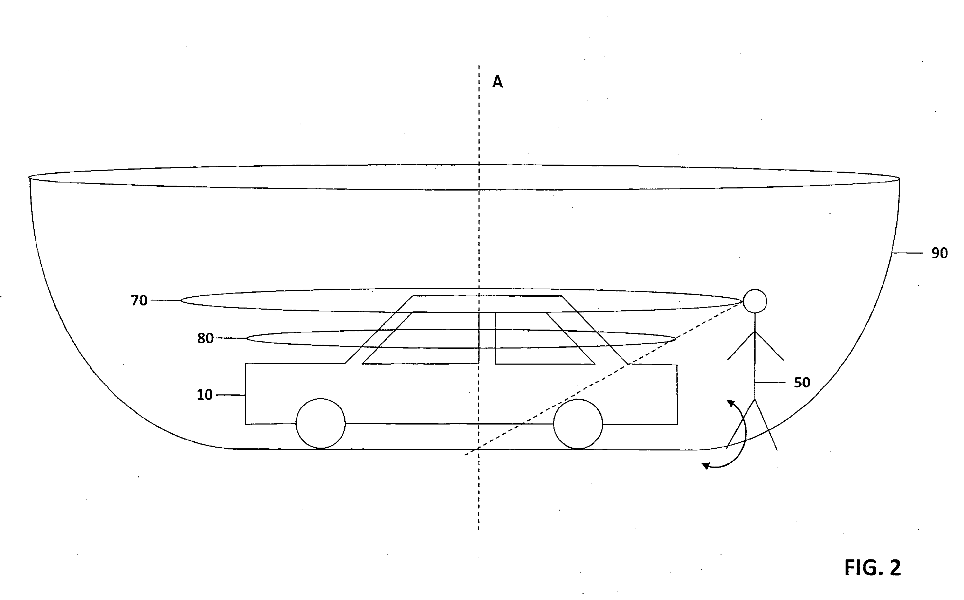

In Fig. 1 a vehicle 10 is shown in which four image sensors, preferably fish eye cameras 11, are incorporated. The image sensors are placed in the perimeter of the vehicle symmetrically in such a way that they cover the complete surrounding perimeter. By way of example the side cameras may be provided in the left and right door mirrors. The rear and the front cameras may be located in different locations depending on the type of the vehicle. The image surround view system furthermore comprises an image processing unit 20 that receives the image data generated by the different cameras 11 and which uses the image data in such a way that a vehicle surround view is generated. The vehicle surround view is displayed using a virtual camera position and using a viewing direction of the virtual camera position. The vehicle surroundings as viewed or observed from the virtual camera position is a virtual user vehicle view as the vehicle is viewed by the virtual user 50 shown in Fig. 2 and located at the virtual camera position. The virtual user vehicle view can be displayed on a display 30. A control unit 40 is provided with which the position and the viewing angle can be changed. By way of example the control unit 40 can be a common turn/press button as used in present vehicle audio systems. The shown vehicle surround view system of Fig. 1 can be part of a multi-media system contained in the vehicle, and the display may be the display which is also used for providing information to the user of the multi-media system. It should be understood that the vehicle surround view system shown in Fig. 1 may have other components and that, in the example shown, only the components are shown which are needed for the understanding of the invention. The processing unit 20, for processing the image data of the image sensors 11, may contain one or several processors that process the image data as described in more detail further below. The processing unit may be a combination of hardware and software.

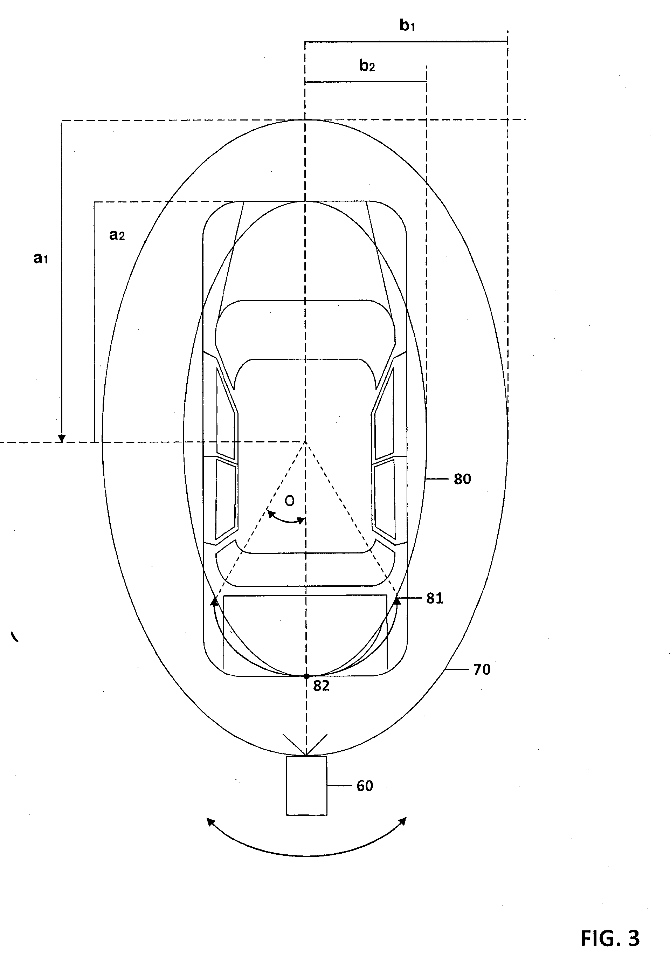

In Fig. 2 a side view of the situation is shown which helps to understand how the virtual user vehicle view is generated. The virtual user 50 looks at the vehicle 10, the virtual user corresponding to a virtual camera position of a virtual camera 60 in Fig. 3. The virtual camera position is located at a first height above ground on a first ellipse 70 shown in Figs. 2 and 3. The height is determined such that the height of the virtual camera position is at eye level of a user having an average height. By way of example the average height at the eye level may be between 1.5 m and 1.8 m. The viewing direction of the virtual user 50 is such that the viewing direction always goes through points located on a second ellipse 80 which is provided at a lower height than the first ellipse. As a consequence, a view directed downwards is obtained.

As can be seen from Figs. 2 and 3, the second ellipse has a size which substantially corresponds to the size of the vehicle in which the vehicle surround view system is incorporated. As the vehicle has a cuboid shape, the ellipse is used by the image processing unit 20 for generating the virtual user vehicle views.

The image data of the four fish eye cameras 11 shown in Fig. 1 are inversely projected on a bowl 90 which surrounds the vehicle 10. The vehicle is located on the bottom or ground floor of the bowl. As the vehicle has a rectangular form and is not quadratic, the bowl shape is stretched along the vehicle axis, the bowl being constituted of different horizontal slices of ellipsoidal shape at the upper end of the bowl 90. The shape of the slices gradually changes from an ellipsoidal shape to a curved rectangle. A more detailed description of the bowl and its shape can be found in the application filed by the same applicant on April 14, 2011 with the application number EP 11 162 470.6.

The situation shown in Fig. 2 and 3 corresponds to a starting vehicle view in which the virtual camera position is positioned as shown in Fig. 3 on the first ellipse on a point of the major axis of the first ellipse, the viewing direction going through point 82 on the second ellipse and on its major axis. In this starting vehicle view the first ellipse has a first bottom vehicle height as shown in Fig. 2, the second ellipse 80 having a corresponding second bottom vertical height as shown. By way of example the first ellipse may be located between 1.60-1.80 meters above ground, the second ellipse 80 being located between 1.20 and 1.30 meters above ground. The bowl, on its upper end, may have a major axis having an overall length of 14 meters and may have at the height of 1.7 m an overall length of approximately 11 or 12 meters and a width of approximately 8 meters. At the starting vehicle view the ellipse 70 may have a semi-major axis a1 as shown in Fig. 3 of approximately 3.5 meters, the semi-minor axis b1 of the large ellipse being in the range of 2.4 to 2.8m. The centers of the first and of the second ellipse are located on the same axis, they are arranged coaxial at different vertical heights on axis A shown in Fig. 1.

The semi-major axis of the second ellipse 80 may be a2=3m and the semi-minor axis b2 being approximately 1.5m. It should be understood that the values depend on the size of the vehicle and on the size of the bowl. Preferably, the virtual user 50 is located in side the bowl as shown in Fig. 2 and represented by the virtual camera 60 having a virtual camera position as shown in Fig. 3. It should be understood that the size of the first and the second ellipse may be selected in a different way. If the size of the second ellipse is selected larger, the size of the first ellipse also should be selected larger as the viewing direction should be directed towards the vehicle and should not be too high or too low. When the user, starting from the position shown in Fig. 3, wants to have a more detailed view of the right side of the vehicle as shown in Fig. 3, the user may turn the control unit 40 shown in Fig. 1 to the right to indicate the user's intention.

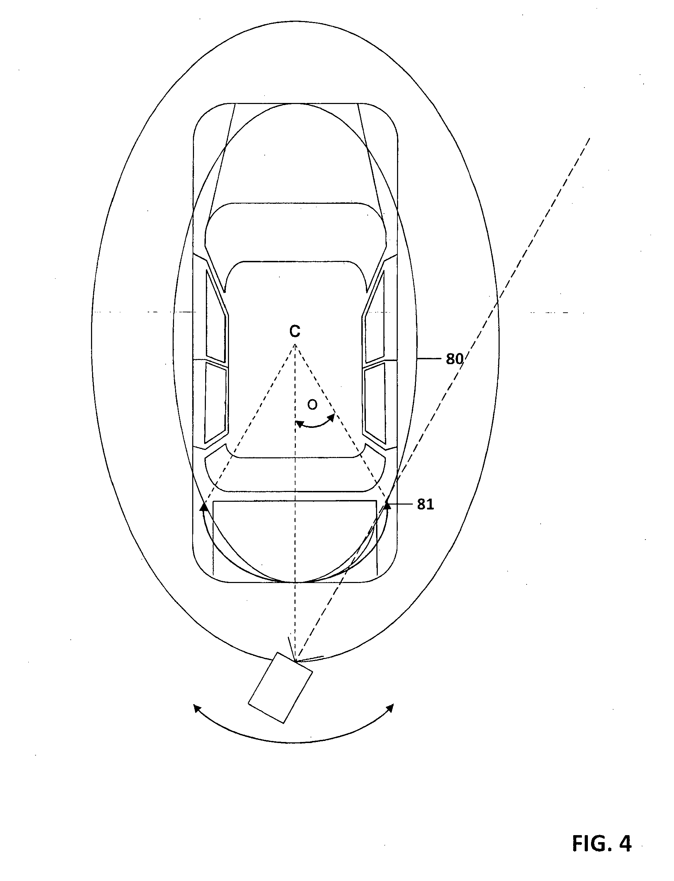

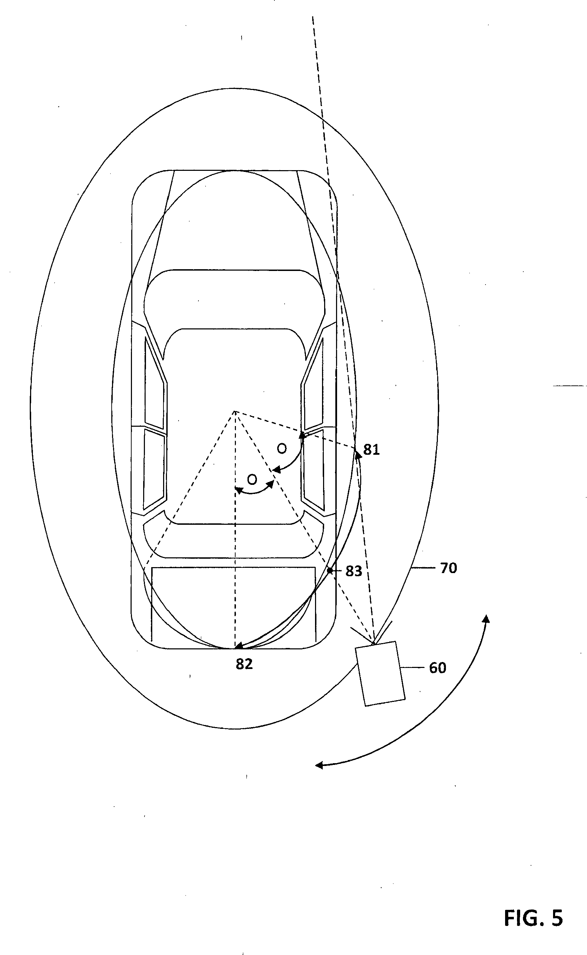

As shown in Fig. 4, when it is detected that the user is interested in having a more detailed view of the right side of the vehicle, the virtual camera position is at the beginning kept unchanged and only the viewing angle is directed to the right side. When the viewing angle is changed from the position shown in Fig. 3 to the position shown in Fig. 4, the viewing direction is such that during the movement the viewing direction always goes through points located on the second ellipse 80. In the embodiment shown in Fig. 4 it is point 81 of the second ellipse. The viewing direction is changed until a maximum angle O shown in Fig. 4 is obtained, the angle O being the maximum opening angle of the viewing direction. As shown in Fig. 4 the angle O is defined by the projection of the direct connection of the camera position to the center C on a plane defined by the second ellipse and by the connection of the point on the second ellipse through which the viewing direction goes and the center of the second ellipse, here center C. When this maximum opening angle is attained and if then a further movement of the virtual camera position is desired, the virtual camera position is moved in said direction as shown in Fig. 5. As can be seen from Fig. 5, the viewing direction is, during the movement of the virtual camera position, adapted in such a way that the maximum opening angle O is maintained, so that, when the virtual camera position moves to the right point 81 of the second ellipse is moved on the second ellipse further away from the camera.

When the user stops to activate the control unit in the situation shown in Fig. 5, the virtual camera position may either stay with the viewing direction as shown or the viewing direction may be automatically centered again to the center of the vehicle to go through point 83 on the second ellipse.

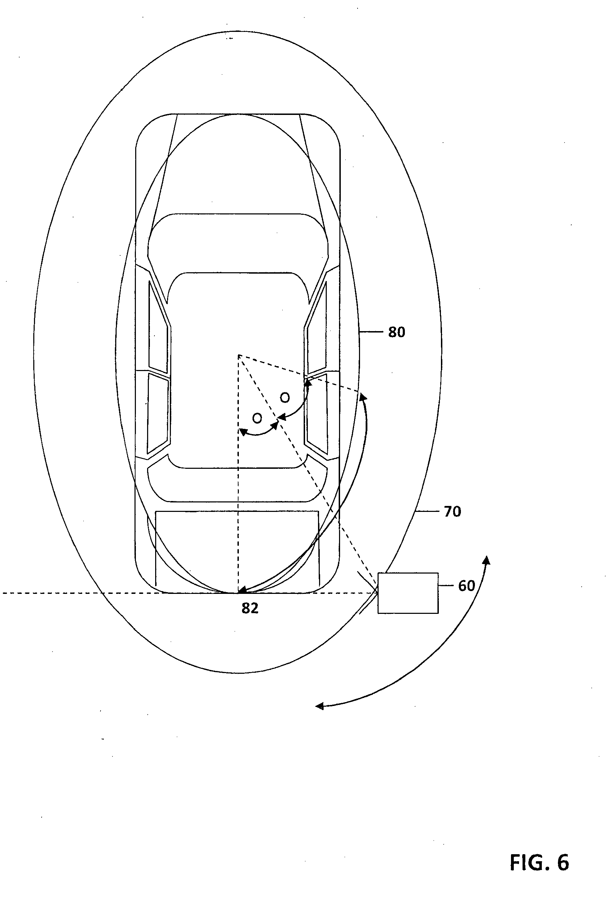

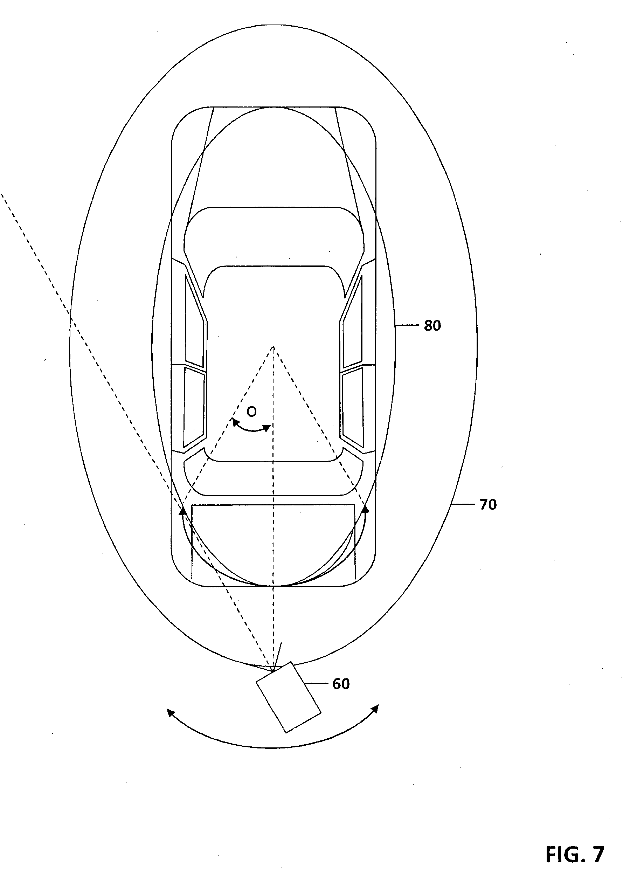

In the embodiment shown in Fig. 6 it is shown how the system reacts when the user instructs the system to look again to the other side of the vehicle, here the left side. First, as shown in Fig. 6, the virtual camera 60 changes the viewing direction and maintains the virtual camera position. The viewing direction is again changed in such a way that the viewing direction is changed to the left until the maximum opening angle O is attained. If the user then further instructs the system to look to the left side of the vehicle, the virtual camera position moves on the first ellipse to the other direction with the maximum opening angle O being maintained during the movement of the virtual camera 60. When the user has finished to manipulate the control unit in one of the two directions, the virtual camera may either stay in the last position, e.g. in the position as shown in Fig. 7 or 5 or the viewing direction may return to the center of the vehicle position.

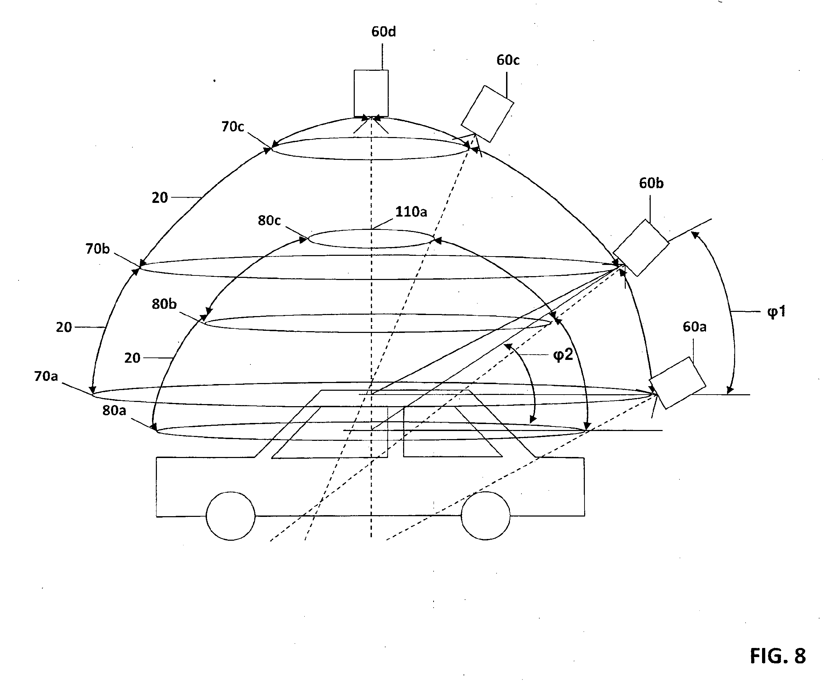

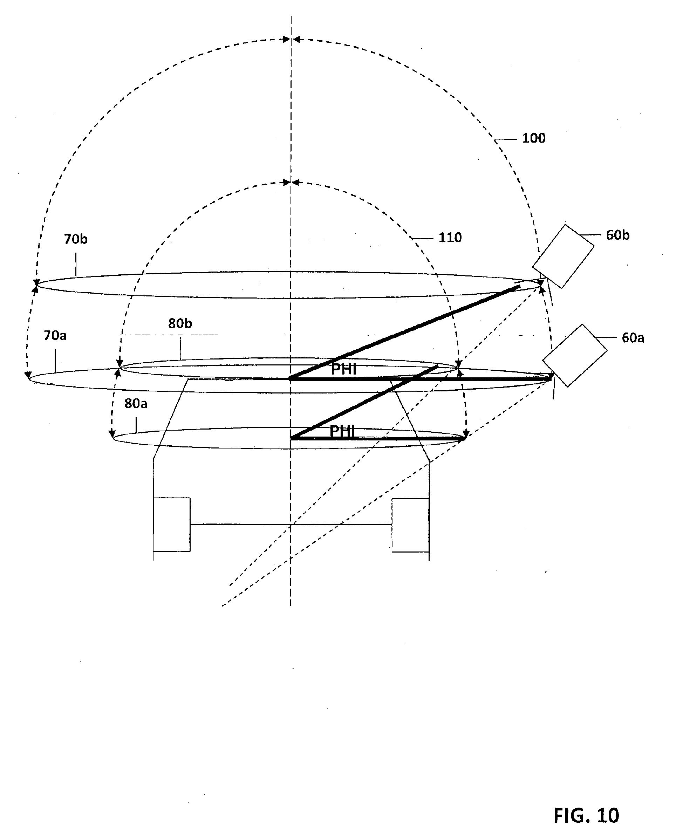

In the system shown in Fig. 1 it is furthermore possible to change the vertical position of the virtual camera. In the embodiment shown in Fig. 8 and Fig. 10 the starting vehicle view with a virtual camera position 60a is shown in which the first and the second ellipse 70a, 80a are provided at the first bottom vertical height and at the second bottom vertical height, respectively. The camera vertical height is at the first bottom vertical height shown by the first ellipse 70a, the second ellipse 80a being at the second bottom vertical height indicated by the position shown. The camera is moved on an ellipsoidally shaped body. This body is defined by rotating the first ellipse 70a at its bottom vertical height about its minor axis, the body defined by its rotation being the body on which the vertical camera position is moved.

At the same time the second ellipse 80 is also moved upwards as shown by ellipse 80b, the second ellipse also moving on an ellipsoidal body 110 defined by the rotation of the second ellipse at the bottom vertical height around its minor axis. The second ellipse 80b is moved in the vertical direction in such a way that, if the virtual camera position is moved along the first ellipsoidal body 100 until a desired elevation angle is obtained, e.g. ϕ1 shown in Fig. 8 and Fig. 10, the same elevation angle ϕ2= ϕ1 is used in the coordinate system defined by the second ellipse 80a. The same rules apply for the virtual camera position 60c and the corresponding first ellipse 70c and second ellipse 80c. It should be understood that in the position 60d in the position above the vehicle center the situation is slightly different, as the viewing direction is not on the second ellipse but is straight downwards on the vehicle, or in other words the second ellipse is a point on the second body 110, to be more specific the second ellipse is point 110a on the second body. It should be understood that at the different vertical heights the horizontal movement is possible as explained above in connection with Fig. 2 to 7.

With the embodiment shown in Fig. 8 and Fig. 10 the vehicle stays approximately centered in the virtual user vehicle view.

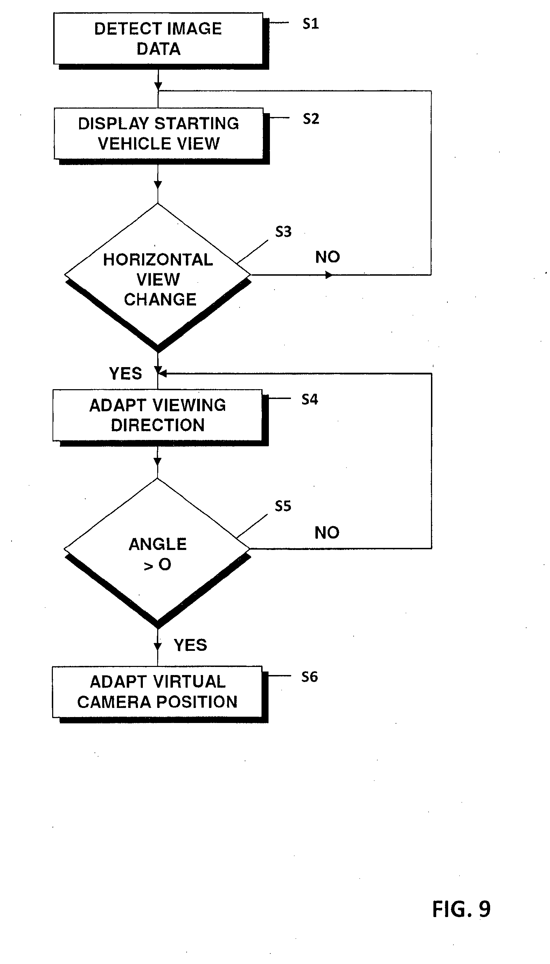

In Fig. 9 a flowchart is shown summarizing the steps for adapting the horizontal virtual user vehicle view. In a first step S1 the image sensors 11 generate image data that cover the complete vehicle surroundings. The processing unit then combines the image data from that different image sensors and projects them inversely on bowl 90 shown in Fig. 1. In step S2 a starting virtual user vehicle view is displayed in which the camera and the viewing direction are selected as shown in Fig. 3 where the vehicle is shown from its rear side with the viewing direction towards the vehicle. In step S3 it is then asked in the image processing unit whether a command for a horizontal view change is detected. If this is not the case, the image stays with the displayed starting vehicle view. If the system detects in step S3 that the horizontal view should be changed, either in one direction or in the other direction, on the first ellipse, the viewing angle is adapted accordingly as shown by Fig. 3. If it is detected in step S3 that the left side of the vehicle should be shown in more detail, the viewing direction is adapted accordingly by moving the viewing direction along the points located on the second ellipse to the left until the maximum opening angle O is obtained (step S4). In step S5 it is then asked whether the predefined maximum opening angle is attained. If not, the viewing angle is further adapted as mentioned in step S4. If it is detected in step S5 that the maximum viewing angle has been attained, the virtual camera position is adapted accordingly in step S6. As shown in Fig. 5, the virtual camera is moved on the first ellipse, the viewing direction being determined such that the maximum opening angle is maintained, the points on the second ellipse through which the viewing direction goes being defined by the maximum opening angle.

With the method explained in connection with Fig. 9 it is possible to obtain an overview over the complete vehicle surroundings by moving the camera on the first ellipse around the complete vehicle, if needed. The different vehicle views can be obtained easily by a user by simply using a two-way operating element or control unit, e.g. a two-way rocker or a turning element to indicate to the system that the view should be more directed to one side or the other side. Additionally, it is possible that the system and the control unit are configured in such a way that the vertical height of the virtual camera position can be adapted as shown in Fig. 8 and Fig. 10. For this vertical movement of the camera two additional degrees of freedom are necessary. The vertical movement can be obtained in addition to and independently from the horizontal movement. For changing the vertical position of the virtual camera position a further two-way operating element may be provided.

Summarizing, with the above-described invention it is possible to display to a user a virtual vehicle view as if the user walked around the vehicle. Through this perspective familiar to the user the user can easily understand the images shown and can recognize the displayed objects. Further, the horizontal vehicle view change can be controlled easily by a two-way operating element.

## Claims

1. A vehicle surround view system comprising:
- a plurality of image sensors (11) provided at different locations of the vehicle , the image sensors (11) generating image data of the vehicle surroundings that cover the complete surroundings of the vehicle,
- an image processing unit (20) processing the image data of the plurality of image sensors (11), the image processing unit (20) being configured to generate a vehicle surround view based on the image data of the different image sensors (11), wherein the image processing unit is configured to use a virtual camera position from which the vehicle surround view is observed in order to generate a virtual user vehicle view,
- a control unit (40), allowing the virtual camera position to be changed at least in a horizontal direction and allowing the viewing direction to be changed, **characterised in that** the image processing unit (20), for generating the vehicle surround view, projects the image data inversely on a bowl (90) surrounding the vehicle, and **in that** the virtual camera position being allocated on a first horizontal ellipse (70) located at a first vertical height around the vehicle (10), wherein the image processing unit is configured to determine a viewing direction from the virtual camera position in such a way that it goes through a point located on a second horizontal ellipse (80) located at a second vertical height around the vehicle that is lower than the first vertical height, the second ellipse (80) being smaller than the first ellipse.

2. The vehicle surround view system according to claim 1, wherein, for a change of the vehicle user's vehicle view in one horizontal direction, the image processing unit (20) is configured to first keep the virtual camera position fixed and to change the viewing direction in such a way that the viewing direction goes through points located on the second ellipse (80), wherein the points move in said one horizontal direction on the second ellipse when the viewing direction is changed.

3. The vehicle surround view system according to claim 2, wherein the image processing unit (10) is configured to keep the virtual camera position fixed and to change the viewing direction until a predefined maximum opening angle of the viewing direction at a center of a plane defined by the second ellipse is obtained, wherein, for a further change of the vehicle view in said one horizontal direction, the image processing unit (20) is configured to move the virtual camera position on the first ellipse in said one horizontal direction, the viewing direction continuing to go through points on the second ellipse.

4. The vehicle surround view system according to claim 3, wherein the image processing unit (10) is configured such that, when the virtual camera position on the first ellipse (70) is moved in said one horizontal direction, the viewing direction is determined for each of the positions of the virtual camera position on the first ellipse (70) in such a way that the viewing direction continues to go through points located on the second ellipse (80) in said one direction with the predefined maximum opening angle being maintained.

5. The vehicle surround view system according to any one of the preceding claims, wherein the image processing unit (20) determines the size of the second ellipse in such a way, that the size of the second ellipse (80) corresponds substantially to the vehicle size.

6. The vehicle surround view system according to any one of the preceding claims, wherein the image processing unit (20) is configured to use a first bottom vertical height of the virtual camera position, which is substantially at eye level of a human being having an average height.

7. The vehicle surround view system according to any one of the preceding claims, wherein the image processing unit (20) is configured to provide a starting vehicle view in which the virtual camera position is behind the vehicle (10) on a point of the first ellipse (70) that is located on a major axis of the first ellipse, the viewing direction going through a point on the second ellipse (80) that is located on the major axis of the second ellipse.

8. The vehicle surround view system according to any one of the preceding claims, wherein the image processing unit (20) is configured to position the first and the second ellipse coaxial and parallel to each other.

9. The vehicle surround view system according to any one of the preceding claims, wherein the control unit contains a turning portion which is operable to be turned in one direction, to indicate a change of the vehicle view in one horizontal direction, and which is operable to be turned in the other direction, to indicate a change of the vehicle view in the other horizontal direction.

10. The vehicle surround view system according to any one of the preceding claims, wherein the image processing unit (20) is configured to change the virtual camera position in a vertical plane from a bottom vertical height to a bird's eye view above the vehicle, the size of the first and of the second ellipse (70, 80) depending on the corresponding vertical height.

11. The vehicle surround view system according to claim 10, wherein the virtual camera position provided on the first ellipse is moved in the vertical direction on a first ellipsoidally shaped body defined by a rotation of the first ellipse at a first bottom vertical height about its minor axis, the viewing direction continuing to go through points located on a second ellipsoidally shaped body defined by a rotation of the second ellipse at a second bottom vertical height about its minor axis.

12. A method for generating a vehicle surround view using a plurality of image sensors (11) provided at different locations of the vehicle (10), the image sensors (10) generating image data of the vehicle surroundings that cover the complete surroundings of the vehicle, the method comprising the steps of:
- processing the image data of the plurality of image sensors (11) to generate the vehicle surround view based on the image data of the different image sensors, wherein the image data are inversely projected on a bowl surrounding the vehicle,
- generating a virtual user vehicle view in which the vehicle surround view is shown from a virtual camera position from which the vehicle is observed using a viewing direction, wherein the virtual camera position is allocated on a first horizontal ellipse (70) located at a first vertical height around the vehicle, wherein the viewing direction from the virtual camera position is such that it goes through a point located on a second horizontal ellipse (80) located at a second vertical height around the vehicle that is lower than the first vertical height, the second ellipse (80) being smaller than the first ellipse (70).

13. The method for generating a vehicle surround view according to claim 12, wherein, when a command for changing the vehicle view in one horizontal direction is detected, the virtual camera position is kept unchanged at the beginning, and in response to the detected command, the viewing direction is changed in such a way that the viewing direction goes through points located on the second ellipse (80), wherein the points located on the second ellipse (80) move in said one horizontal direction on the second ellipse (80) when the viewing direction is changed.

14. The method for generating a vehicle surround view according to claim 13, wherein the virtual camera position is kept unchanged until a predefined maximum opening angle of the viewing direction at a center of a plane defined by the second ellipse (80) is obtained, wherein, when a command for further changing the vehicle view in said one horizontal direction is detected when the predefined maximum opening angle has been reached , the virtual camera position is moved on the first ellipse in said one horizontal direction, the viewing direction continuing to go through points on the second ellipse (80).

15. The method for generating a vehicle surround view according to claim 14, wherein, when the virtual camera position on the first ellipse (70) is moved in said one horizontal direction, the viewing direction is determined for each of the positions of the virtual camera position on the first ellipse (70) in such a way that the viewing direction continues to go through points located on the second ellipse (80), said points being determined such that the predefined maximum opening angle of the viewing direction is maintained during movement for each of the positions of the virtual camera position on the first ellipse (70).

16. The method for generating a vehicle surround view according to any one of claims 12 to 15, wherein, for generating the virtual user vehicle view, a starting vehicle view is determined in which the virtual camera position is behind the vehicle on a point of the first ellipse that is located on a major axis of the first ellipse (70), the viewing direction being parallel to a long axis of the vehicle and to a major axis of the first ellipse.

17. The method for generating a vehicle surround view according to any one of claims 12 to 16, wherein when a command for changing the vehicle view in the other horizontal direction is detected, the virtual camera position is kept unchanged at the beginning, and in response to the detected command, the viewing direction is changed in such a way that the viewing direction goes through points located on the second ellipse, wherein the points move in the other horizontal direction on the second ellipse when the viewing direction is changed.

18. The method for generating a vehicle surround view according to any one of claims 12 to 17, wherein the virtual camera position is changed in a vertical plane from a bottom vertical height to a bird's eye view above the vehicle, the size of the first and of the second ellipse depending on the corresponding vertical height.

19. The method for generating a vehicle surround view according to claim 18, wherein the virtual camera position is moved in the vertical direction on a first ellipsoidally shaped body defined by a rotation of the first ellipse at a first bottom vertical height about its minor axis, the viewing direction continuing to go through points located on a second ellipsoidally shaped body defined by a rotation of the second ellipse at a second bottom vertical height about its minor axis.

20. The method for generating a vehicle surround view according to any one of claims 12 to 19, wherein the command for changing the vehicle view in the one or the other horizontal direction is detected, when a turn button is turned in one direction or the other direction.

21. The method for generating a vehicle surround view according to any one of claims 12 to 20, wherein the generated virtual user vehicle view is displayed on a display.

22. The method for generating a vehicle surround view according to any one of claims 12 to 21, wherein the virtual camera position is located inside the bowl.

## Patentansprüche

1. Fahrzeugrundumsicht-Anlage, umfassend:
- eine Vielzahl von Bildsensoren (11), die an verschiedenen Stellen des Fahrzeugs bereitgestellt werden, wobei die Bildsensoren (11) Bilddaten der Fahrzeugumgebung generieren, welche die gesamte Umgebung des Fahrzeugs abdecken,
- eine Bildverarbeitungseinheit (20), welche die Bilddaten der Vielzahl von Bildsensoren (11) verarbeitet, wobei die Bildverarbeitungseinheit (20) konfiguriert ist, um eine Fahrzeugrundumsicht basierend auf den Bilddaten der verschiedenen Bildsensoren (11) zu generieren,
wobei die Bildverarbeitungseinheit konfiguriert ist, um eine virtuelle Kameraposition zu verwenden, von der aus die Fahrzeugrundumsicht betrachtet wird, um eine virtuelle Benutzerfahrzeugsicht zu generieren,
- eine Steuereinheit (40), die es ermöglicht, die virtuelle Kameraposition mindestens in einer waagerechten Richtung zu ändern, und es ermöglicht, die Blickrichtung zu ändern,
**dadurch gekennzeichnet, dass** die Bildverarbeitungseinheit (20) zum Generieren der Fahrzeugrundumsicht die Bilddaten umgekehrt auf eine Schale (90) projiziert, die das Fahrzeug umgibt, und dass die virtuelle Kameraposition auf einer ersten waagerechten Ellipse (70) zugeteilt wird, die sich auf einer ersten senkrechten Höhe um das Fahrzeug (10) herum befindet, wobei die Bildverarbeitungseinheit konfiguriert ist, um eine Blickrichtung von der virtuellen Kameraposition aus derart zu bestimmen, dass sie durch einen Punkt geht, der sich auf einer zweiten waagerechten Ellipse (80) befindet, die sich auf einer zweiten senkrechten Höhe um das Fahrzeug herum befindet, die geringer als die erste senkrechte Höhe ist, wobei die zweite Ellipse (80) kleiner als die erste Ellipse ist.

2. Fahrzeugrundumsicht-Anlage nach Anspruch 1, wobei für eine Änderung der Fahrzeugsicht des Fahrzeugbenutzers in einer waagerechten Richtung die Bildverarbeitungseinheit (20) konfiguriert ist, um die virtuelle Kameraposition zuerst fest zu halten, und um die Blickrichtung derart zu ändern, dass die Blickrichtung durch Punkte geht, die sich auf der zweiten Ellipse (80) befinden, wobei sich die Punkte in der einen waagerechten Richtung auf der zweiten Ellipse bewegen, wenn sich die Blickrichtung ändert.

3. Fahrzeugrundumsicht-Anlage nach Anspruch 2, wobei die Bildverarbeitungseinheit (10) konfiguriert ist, um die virtuelle Kameraposition fest zu halten und um die Blickrichtung zu ändern, bis ein vordefinierter maximaler Öffnungswinkel der Blickrichtung in einer Mitte einer Ebene, die durch die zweite Ellipse definiert wird, erreicht wird, wobei für eine weitere Änderung der Fahrzeugsicht in der einen waagerechten Richtung die Bildverarbeitungseinheit (20) konfiguriert ist, um die virtuelle Kameraposition auf der ersten Ellipse in der einen waagerechten Richtung zu bewegen, wobei die Blickrichtung weiter durch Punkte auf der zweiten Ellipse geht.

4. Fahrzeugrundumsicht-Anlage nach Anspruch 3, wobei die Bildverarbeitungseinheit (10) derart konfiguriert ist, dass wenn die virtuelle Kameraposition auf der ersten Ellipse (70) in der einen waagerechten Richtung bewegt wird, die Blickrichtung für jede der Positionen der virtuellen Kameraposition auf der ersten Ellipse (70) derart bestimmt wird, dass die Blickrichtung weiter durch Punkte geht, die sich auf der zweiten Ellipse (80) in der einen Richtung befinden, wobei der vordefinierte maximale Öffnungswinkel beibehalten wird.

5. Fahrzeugrundumsicht-Anlage nach einem der vorhergehenden Ansprüche, wobei die Bildverarbeitungseinheit (20) die Größe der zweiten Ellipse derart bestimmt, dass die Größe der zweiten Ellipse (80) im Wesentlichen der Fahrzeuggröße entspricht.

6. Fahrzeugrundumsicht-Anlage nach einem der vorhergehenden Ansprüche, wobei die Bildverarbeitungseinheit (20) konfiguriert ist, um eine erste untere senkrechte Höhe der virtuellen Kameraposition zu verwenden, die sich im Wesentlichen auf Augenhöhe einer Person durchschnittlicher Größe befindet.

7. Fahrzeugrundumsicht-Anlage nach einem der vorhergehenden Ansprüche, wobei die Bildverarbeitungseinheit (20) konfiguriert ist, um eine Anfangsfahrzeugsicht bereitzustellen, in der sich die virtuelle Kameraposition hinter dem Fahrzeug (10) an einem Punkt der ersten Ellipse (70) befindet, der sich auf einer Hauptachse der ersten Ellipse befindet, wobei die Blickrichtung durch einen Punkt auf der zweiten Ellipse (80) geht, der sich auf der Hauptachse der zweiten Ellipse befindet.

8. Fahrzeugrundumsicht-Anlage nach einem der vorhergehenden Ansprüche, wobei die Bildverarbeitungseinheit (20) konfiguriert ist, um die erste und die zweite Ellipse zueinander koaxial und parallel zu positionieren.

9. Fahrzeugrundumsicht-Anlage nach einem der vorhergehenden Ansprüche, wobei die Steuereinheit einen Drehabschnitt enthält, der verwendbar ist, um in eine Richtung gedreht zu werden, um eine Änderung der Fahrzeugsicht in einer waagerichten Richtung anzugeben, und der verwendbar ist, um in die andere Richtung gedreht zu werden, um eine Änderung der Fahrzeugsicht in der anderen waagerechten Richtung anzugeben.

10. Fahrzeugrundumsicht-Anlage nach einem der vorhergehenden Ansprüche, wobei die Bildverarbeitungseinheit (20) konfiguriert ist, um die virtuelle Kameraposition in einer senkrechten Ebene von einer unteren senkrechten Höhe auf eine Ansicht aus Vogelperspektive über dem Fahrzeug zu ändern, wobei die Größe der ersten und der zweiten Ellipse (70, 80) von der entsprechenden senkrechten Höhe abhängig ist.

11. Fahrzeugrundumsicht-Anlage nach Anspruch 10, wobei die virtuelle Kameraposition, die auf der ersten Ellipse bereitgestellt wird, in der senkrechten Richtung auf einem ersten ellipsoidisch gestalteten Körper bewegt wird, der durch eine Rotation der ersten Ellipse auf einer ersten unteren senkrechten Höhe um ihre Nebenachse definiert wird, wobei die Blickrichtung weiter durch Punkte geht, die sich auf einem zweiten ellipsoidisch gestalteten Körper befinden, der durch eine Rotation der zweiten Ellipse auf einer zweiten unteren senkrechten Höhe um ihre Nebenachse definiert wird.

12. Verfahren zum Generieren einer Fahrzeugrundumsicht unter Verwendung einer Vielzahl von Bildsensoren (11), die an verschiedenen Stellen des Fahrzeugs (10) bereitgestellt werden, wobei die Bildsensoren (10) Bilddaten der Fahrzeugumgebung generieren, welche die gesamte Umgebung des Fahrzeugs abdecken, wobei das Verfahren folgende Schritte umfasst:
- Verarbeiten der Bilddaten der Vielzahl von Bildsensoren (11), um die Fahrzeugrundumsicht basierend auf den Bilddaten der verschiedenen Bildsensoren zu generieren, wobei die Bilddaten umgekehrt auf eine Schale projiziert werden, die das Fahrzeug umgibt,
- Generieren einer virtuellen Benutzerfahrzeugsicht, in der die Fahrzeugrundumsicht von einer virtuellen Kameraposition aus gezeigt wird, aus der das Fahrzeug unter Verwendung einer Blickrichtung betrachtet wird, wobei die virtuelle Kameraposition auf einer ersten waagerechten Ellipse (70) zugeteilt ist, die sich auf einer ersten senkrechten Höhe um das Fahrzeug herum befindet, wobei die Blickrichtung aus der virtuellen Kameraposition derart ist, dass sie durch einen Punkt geht, der sich auf einer zweiten waagerechten Ellipse (80) befindet, die sich auf einer zweiten senkrechten Höhe um das Fahrzeug herum befindet, die tiefer als die erste senkrechte Höhe ist, wobei die zweite Ellipse (80) kleiner als die erste Ellipse (70) ist.

13. Verfahren zum Generieren einer Fahrzeugrundumsicht nach Anspruch 12, wobei, wenn ein Befehl zum Ändern der Fahrzeugsicht in einer waagerechten Richtung ermittelt wird, die virtuelle Kameraposition zu Beginn unverändert bleibt und als Reaktion auf den ermittelten Befehl die Blickrichtung derart geändert wird, dass die Blickrichtung durch Punkte geht, die sich auf der zweiten Ellipse (80) befinden, wobei sich die Punkte, die sich auf der zweiten Ellipse (80) befinden, in der einen waagerechten Richtung auf der zweiten Ellipse (80) bewegen, wenn sich die Blickrichtung ändert.

14. Verfahren zum Generieren einer Fahrzeugrundumsicht nach Anspruch 13, wobei die virtuelle Kameraposition unverändert bleibt, bis ein vordefinierter maximaler Öffnungswinkel der Blickrichtung auf eine Mitte einer Ebene, die durch die zweite Ellipse (80) definiert wird, erzielt wird, wobei, wenn ein Befehl zum weiteren Ändern der Fahrzeugsicht in der einen waagerechten Richtung ermittelt wird, wenn der vordefinierte maximale Öffnungswinkel erreicht wurde, die virtuelle Kameraposition auf der ersten Ellipse in der einen waagerechten Richtung bewegt wird, wobei die Blickrichtung weiter durch Punkte auf der zweiten Ellipse (80) geht.

15. Verfahren zum Generieren einer Fahrzeugrundumsicht nach Anspruch 14, wobei wenn die virtuelle Kameraposition auf der ersten Ellipse (70) in der einen waagerechten Richtung bewegt wird, die Blickrichtung für jede der Positionen der virtuellen Kameraposition auf der ersten Ellipse (70) derart bestimmt wird, dass die Blickrichtung weiter durch Punkte geht, die sich auf der zweiten Ellipse (80) befinden, wobei die Punkte derart bestimmt werden, dass der vordefinierte maximale Öffnungswinkel der Blickrichtung während der Bewegung für jede der Positionen in der virtuellen Kameraposition auf der ersten Ellipse (70) beibehalten wird.

16. Verfahren zum Generieren einer Fahrzeugrundumsicht nach einem der Ansprüche 12 bis 15, wobei zum Generieren der virtuellen Benutzerfahrzeugsicht eine Anfangsfahrzeugsicht bestimmt wird, bei der sich die virtuelle Kameraposition hinter dem Fahrzeug auf einem Punkt der ersten Ellipse befindet, der sich auf einer Hauptachse auf der ersten Ellipse (70) befindet, wobei die Blickrichtung parallel zu einer Längsachse des Fahrzeugs und zu einer Hauptachse der ersten Ellipse ist.

17. Verfahren zum Generieren einer Fahrzeugrundumsicht nach einem der Ansprüche 12 bis 16, wobei, wenn ein Befehl zum Ändern der Fahrzeugsicht in der anderen waagerechten Richtung ermittelt wird, die virtuelle Kameraposition zu Beginn unverändert bleibt und als Reaktion auf den ermittelten Befehl die Blickrichtung derart geändert wird, dass die Blickrichtung durch Punkte geht, die sich auf der zweiten Ellipse befinden, wobei sich die Punkte in der anderen waagerechten Richtung auf der zweiten Ellipse bewegen, wenn sich die Blickrichtung ändert.

18. Verfahren zum Generieren einer Fahrzeugrundumsicht nach einem der Ansprüche 12 bis 17, wobei die virtuelle Kameraposition in einer senkrechten Ebene von einer unteren senkrechten Höhe auf eine Ansicht aus Vogelperspektive über dem Fahrzeug geändert wird, wobei die Größe der ersten und der zweiten Ellipse von der entsprechenden senkrechten Höhe abhängig ist.

19. Verfahren zum Generieren einer Fahrzeugrundumsicht nach Anspruch 18, wobei die virtuelle Kameraposition in der senkrechten Richtung auf einem ersten ellipsoidisch gestalteten Körper bewegt wird, der durch eine Rotation der ersten Ellipse auf einer ersten unteren senkrechten Höhe um ihre Nebenachse definiert wird, wobei die Blickrichtung weiter durch Punkte geht, die sich auf einem zweiten ellipsoidisch gestalteten Körper befinden, der durch eine Rotation der zweiten Ellipse auf einer zweiten unteren senkrechten Höhe um ihre Nebenachse definiert wird.

20. Verfahren zum Generieren einer Fahrzeugrundumsicht nach einem der Ansprüche 12 bis 19, wobei der Befehl zum Ändern der Fahrzeugsicht in der einen oder der anderen waagerechten Richtung ermittelt wird, wenn ein Drehknopf in die eine Richtung oder die andere Richtung gedreht wird.

21. Verfahren zum Generieren einer Fahrzeugrundumsicht nach einem der Ansprüche 12 bis 20, wobei die erzeugte virtuelle Benutzerfahrzeugsicht auf einem Display angezeigt wird.

22. Verfahren zum Generieren einer Fahrzeugrundumsicht nach einem der Ansprüche 12 bis 21, wobei sich die virtuelle Kameraposition im Innern der Schale befindet.

## Revendications

1. Système de visualisation panoramique de véhicule comprenant :
- une pluralité de capteurs d'images (11) situés à différents emplacements du véhicule, les capteurs d'images (11) générant des données d'image des alentours du véhicule qui couvrent l'intégralité des alentours du véhicule,
- une unité de traitement d'image (20) traitant les données d'image de la pluralité de capteurs d'images (11), l'unité de traitement d'image (20) étant configurée pour générer la vue panoramique d'un véhicule basée sur des données d'image des différents capteurs d'images (11), l'unité de traitement d'image étant configurée pour utiliser une position virtuelle de la caméra à partir de laquelle la vue panoramique du véhicule est observée afin de générer une vue virtuelle de l'utilisateur du véhicule.
- une unité de commande (40), permettant de changer la position virtuelle de la caméra au moins dans une direction horizontale et permettant la modification de direction vue, **caractérisée en ce que** l'unité de traitement d'image (20), pour générer la vue panoramique d'un véhicule, projette les données d'image inverse sur un bol (90) entourant le véhicule, et **en ce que** la position virtuelle de la caméra est attribuée à une première ellipse horizontale (70) située à une première hauteur verticale autour du véhicule (10), l'unité de traitement d'image étant configurée de manière à déterminer une direction de vue à partir de la position virtuelle de la caméra de sorte qu'elle passe par un point situé sur une deuxième ellipse horizontale (80) située à une deuxième hauteur verticale autour du véhicule qui est inférieure à la première hauteur verticale, la deuxième ellipse (80) étant plus petite que la première ellipse

2. Système de vue panoramique de véhicule selon la revendication 1, dans lequel pour un changement de la vue de l'utilisateur du véhicule dans une direction horizontale, l'unité de traitement d'image (20) est configurée pour maintenir d'abord la position virtuelle de la caméra fixe et pour modifier la direction de vue de façon à ce que la direction de vue passe par les points situés sur la deuxième ellipse (80), les points se déplaçant dans ladite direction horizontale unique sur la deuxième ellipse lorsque la direction de vue est modifiée.

3. Système de vue panoramique de véhicule selon la revendication 2, dans lequel l'unité de traitement d'image (10) est configurée pour maintenir la position virtuelle de la caméra fixe et pour changer la direction de vue jusqu'à ce qu'un angle d'ouverture maximal prédéfini de la direction de vue au centre d'un plan défini par la deuxième ellipse est obtenu, dans lequel, pour une nouvelle modification de la vue du véhicule dans ladite direction horizontale unique, l'unité de traitement d'image (20) est configurée pour déplacer la position virtuelle de la caméra sur la première ellipse dans ladite direction horizontale unique, la direction de vue continuant à passer par des points sur la deuxième ellipse.

4. Système de vue panoramique de véhicule selon la revendication 3, dans lequel l'unité de traitement d'image (10) est configurée de telle sorte que lorsque la position virtuelle de la caméra sur la première ellipse (70) est déplacée dans ladite direction horizontale unique, la direction de vue est déterminée pour chacune des positions de la position virtuelle de la caméra sur la première ellipse (70) de telle sorte que la direction de vue continue de passer par les points situés sur la deuxième ellipse (80) dans ladite direction unique, l'angle d'ouverture maximal prédéfini étant maintenu.

5. Système de vue panoramique de véhicule selon l'une quelconque des revendications précédentes, dans lequel l'unité de traitement d'image (20) détermine la taille de la deuxième ellipse de telle sorte que la taille de la deuxième ellipse (80) correspond sensiblement à la taille du véhicule.

6. Système de vue panoramique de véhicule selon l'une quelconque des revendications précédentes, dans lequel l'unité de traitement d'image (20) est configurée pour utiliser une première hauteur verticale inférieure de la position virtuelle de la caméra, qui est sensiblement à hauteur des yeux d'un être humain ayant une taille moyenne.

7. Système de vue panoramique de véhicule selon l'une quelconque des revendications précédentes, dans lequel l'unité de traitement d'image (20) est configurée pour fournir une image de départ du véhicule, la position virtuelle de la caméra étant derrière le véhicule (10) sur un point de la première ellipse (70) qui est située sur un axe majeur de la première ellipse, la direction de vue passant par un point situé sur la deuxième ellipse (80) qui se trouve sur l'axe majeure de la deuxième ellipse.

8. Système de vue panoramique de véhicule selon l'une quelconque des revendications précédentes, dans lequel l'unité de traitement d'image (20) est configurée pour positionner la première et la deuxième ellipse en position coaxiale et parallèle l'une à l'autre.

9. Système de vue panoramique de véhicule selon l'une quelconque des revendications précédentes, dans lequel l'unité de commande contient une partie pivotante qui peut fonctionner pour être pivotée dans une direction, pour indiquer un changement de vue du véhicule dans une direction horizontale, et qui est utilisable pour être pivoté dans l'autre sens, pour indiquer un changement de vue du véhicule dans l'autre sens horizontal.

10. Système de vue panoramique de véhicule selon l'une quelconque des revendications précédentes, par lequel l'unité de traitement d'image (20) est configurée pour changer la position virtuelle de la caméra dans un plan vertical d'une hauteur vertical inférieure à une vue plongeante au-dessus du véhicule, la taille de la première et de la deuxième ellipse (70, 80) dépendant de la hauteur verticale correspondante.

11. Système de vue panoramique de véhicule selon la revendication 10, dans lequel la position virtuelle de la caméra sur la première ellipse est déplacée dans la direction verticale sur un premier corps en forme ellipsoïdale défini par une rotation de la première ellipse, à une première hauteur verticale inférieure autour de son axe mineur, la direction de vue continuant de passer par des points situés sur un second corps en forme ellipsoïdale défini par une rotation de la deuxième ellipse à une deuxième hauteur verticale inférieure autour de son axe mineur.

12. Procédé générant une vue panoramique de véhicule utilisant une pluralité de capteurs d'images (10) située à différents endroits du véhicule (10), les capteurs d'images (11) générant des données d'image des alentours du véhicule qui couvrent l'intégralité des alentours du véhicule, le procédé comprenant les étapes consistant à :
- traiter les données d'image de la pluralité de capteurs d'image (11) pour générer la vue panoramique du véhicule sur la base des données d'image des différents capteurs d'images, les données d'image étant projetées en sens inverse sur un bol entourant le véhicule,
- générer une vue virtuelle de l'utilisateur du véhicule dans laquelle la vue panoramique du véhicule est représentée à partir d'une position virtuelle de la caméra à partir de laquelle le véhicule est observé en utilisant une direction de vue, la position virtuelle de la caméra étant attribuée à une première ellipse horizontale (70) située à une première hauteur verticale autour du véhicule, dans laquelle la direction de vue à partir de la position virtuelle de la caméra est telle qu'elle passe par un point situé sur une deuxième ellipse horizontale (80) située à une deuxième hauteur verticale autour du véhicule qui est inférieure à la première hauteur verticale, la deuxième ellipse (80) étant plus petite que la première ellipse (70).

13. Procédé générant la vue panoramique de véhicule selon la revendication 12, dans lequel, lorsqu'une commande pour modifier la vue du véhicule dans une direction horizontale est détectée, la position virtuelle de la caméra est maintenue inchangée au début, et en réponse à une commande détectée, la direction d'observation est modifiée de sorte que la direction de vue passe par des points situés sur la deuxième ellipse (80), les points situés sur la deuxième ellipse (80) se déplaçant dans ladite direction horizontale unique sur la deuxième ellipse (80) lorsque la direction de vue est modifiée.

14. Procédé générant la vue panoramique de véhicule selon la revendication 13, dans lequel la position virtuelle de la caméra est maintenue inchangée jusqu'à ce qu'un angle d'ouverture maximal prédéfini de la direction de vue au centre d'un plan défini par la deuxième ellipse (80) soit obtenue, dans lequel, lorsqu'une commande pour de nouveau modifier la vue du véhicule dans ladite direction horizontale unique est détectée lorsque l'angle d'ouverture maximal prédéfini a été atteint, la position virtuelle de la caméra est déplacée sur la première ellipse dans ladite direction horizontale unique, la direction de vue continuant de passer par les points sur la deuxième ellipse (80).

15. Procédé générant la vue panoramique de véhicule selon la revendication 14, dans lequel, lorsque la position virtuelle de la caméra sur la première ellipse (70) est déplacée dans ladite direction horizontale unique, la direction de vue est déterminée pour chacune des positions de la position virtuelle de la caméra sur la première ellipse (70) de telle sorte que la direction de vue continue de passer par les points situés sur la deuxième ellipse (80), lesdits points étant déterminés de telle sorte que l'angle d'ouverture maximal prédéfini de la direction de vue est maintenu pendant le mouvement pour chacune des positions de la position virtuelle de la caméra sur la première ellipse (70).

16. Procédé générant la vue panoramique de véhicule selon l'une quelconque des revendications 12 à 15, dans lequel, pour générer la vue virtuelle de l'utilisateur du véhicule, une image de départ du véhicule est déterminée dans laquelle la position virtuelle de la caméra est derrière le véhicule sur un point de la première ellipse qui est située sur un axe majeur de la première ellipse (70), la direction de vue étant parallèle à un axe longitudinal du véhicule et à un axe majeur de la première ellipse.

17. Procédé générant la vue panoramique de véhicule selon l'une quelconque des revendications 12 à 16, dans lequel quand une commande pour changer la vue du véhicule dans l'autre direction horizontale est détectée, la position virtuelle de la caméra est maintenue inchangée au début, et en réponse à la commande détectée, la direction de vue est modifiée de telle sorte que la direction de vue passe par des points situés sur la deuxième ellipse, les points se déplaçant dans l'autre direction horizontale sur la deuxième ellipse lorsque la direction de vue est modifiée.

18. Procédé générant la vue panoramique de véhicule selon l'une quelconque des revendications 12 à 17, dans lequel la position virtuelle de la caméra est modifiée dans un plan vertical d'une hauteur verticale inférieure à une vue plongeante au-dessus du véhicule, la taille de la première et de la deuxième ellipse dépendant de la hauteur verticale correspondante.

19. Procédé générant la vue panoramique de véhicule selon la revendication 18, dans lequel la position virtuelle de la caméra est déplacée dans la direction verticale sur un premier corps en forme ellipsoïdale défini par une rotation de la première ellipse, à une première hauteur verticale inférieure autour de son axe mineur, la direction de vue continuant de passer par des points situés sur un second corps en forme ellipsoïdale défini par une rotation de la deuxième ellipse à une deuxième hauteur verticale inférieure autour de son axe mineur.

20. Procédé générant la vue panoramique de véhicule selon l'une quelconque des revendications 12 à 19, dans lequel la commande pour modifier la vue du véhicule dans l'une ou l'autre direction horizontale est détectée, quand un bouton est tourné dans une direction ou l'autre direction.

21. Procédé générant la vue panoramique de véhicule selon l'une quelconque des revendications 12 à 20, dans lequel la vue virtuelle de l'utilisateur du véhicule générée est affichée sur un écran.

22. Procédé générant la vue panoramique de véhicule selon l'une quelconque des revendications 12 à 21, dans lequel la position virtuelle de la caméra se trouve à l'intérieur du bol.
